# EUROPEAN PATENT APPLICATION

(11) **EP 2 568 733 A1**
(43) Date of publication of application: **13.03.2013**
(21) Application number: 10851656.8
(22) Date of filing: 27.10.2010
(51) Int. Cl.: H04W 24/00

(54) **METHOD AND APPARATUS FOR COLLECTING MOBILE COMMUNICATION DATA**

(30) Priority: 20.05.2010 CN 201010178380
(71) Applicant: ZTE Corporation, Shenzhen, Guangdong 518057 (CN)
(72) Inventor: XU, Guoping, Guangdong 518057 (CN)
(74) Representative: Nilsson, Lars-Magnus
(86) International application number: PCT/CN2010/078152
(87) International publication number: WO 2011/143899

(57) **Abstract**

The disclosure provides a method for acquiring mobile communication data, which includes: a data analysis system obtains static user data reported by a network management system, wherein the static user data are relationship information between a user Identity (ID) and a name, and/or shared static data; the data analysis system obtains user behaviour data acquired and reported by a network element system; and the data analysis system performs user behaviour and feature analysis on the data reported by the network management system and the network element system. The disclosure further provides an apparatus for acquiring mobile communication data. The method and apparatus for acquiring mobile communication data provided by the disclosure can realize a simple data acquisition mode and a safe and reliable data transmission.

## Description

### TECHNICAL FIELD

The disclosure relates to the technical field of communications, and relates in particular to a method and apparatus for acquiring mobile communication data.

### BACKGROUND

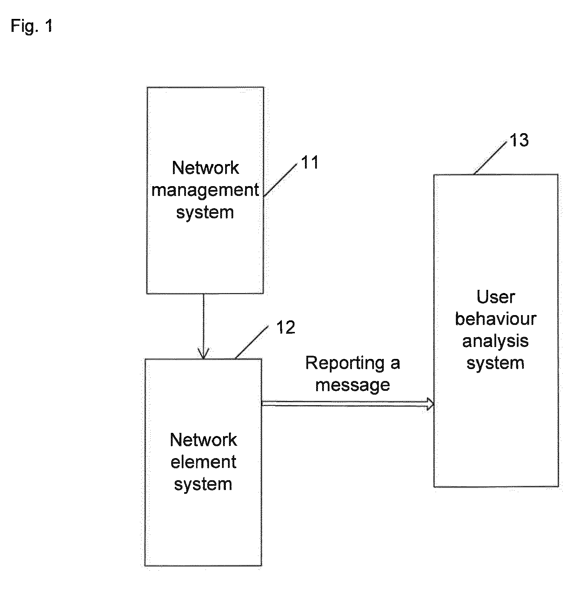

With unceasing development of the 3rd Generation (3G) technology, especially continuous deployment of High Speed Downlink Packet Access (HSDPA) technology and high speed access products, the access bandwidth of a mobile user has made a qualitative leap than it used to be, and has approached the access bandwidth of a fixed network. Improvement of user access bandwidth, emergence of a large number of intelligent cell phones, and appearance and continuous enrichment of various new applications all bring a great challenge to the core network of a mobile operator. As shown in Fig. 1, a system in the related art generally includes a network management system 11, a network element system 12 and a user behaviour analysis system 13, wherein the network management system 11 is connected with the network element system 12, and the network element system 12 is connected with the user behaviour analysis system 13; the network management system 11 reports data to the network element system 12, and the network element system 12 reports data to the user behaviour analysis system 13. The user behaviour analysis system 13 analyzes behavioural features of a mobile user. In the conventional network management system 11, monitoring of network operation conditions mainly relies on alarm monitoring and performance report form analysis, but both two functions reflect the network operation conditions in terms of network element equipment, and cannot reflect specific details (call behaviour, Internet-surfing behaviour, malicious calls of some users, etc.) of each user behaviour, that is, cannot reflect network quality of user granularity; and existing performance statistics performs analysis based on a certain acquisition period, thus real-time monitoring on network quality cannot be achieved either.

### SUMMARY

The objective of the disclosure is to provide a method and apparatus for acquiring mobile communication data, which can realize a simple data acquisition mode and a safe and reliable data transmission.

In order to achieve the objective above, the technical solution of the disclosure is realized as follows.

A method for acquiring mobile communication data is provided, which includes:
a data analysis system obtains static user data reported by a network management system, wherein the static user data are relationship information between a user Identity (ID) and a name, and/or shared static data;
the data analysis system obtains user behaviour data acquired and reported by a network element system; and
the data analysis system performs user behaviour and feature analysis on the data reported by the network management system and the network element system.

Preferably, before the data analysis system obtains the user behaviour data acquired and reported by the network element system, the method may further include: the network element system determines whether a link between the network element system and the data analysis system is normal, when the link between the network element system and the data analysis system is normal, the network element system reports the user behaviour data to the data analysis system; and when the link between the network element system and the data analysis system is abnormal, the network element system reports the user behaviour data to the network management system, and after receiving the user behaviour data reported by the network element system, the network management system generates a data acquisition file which is saved in the form of a file for the data analysis system to extract.

Preferably, the step that the network element system determines whether the link between the network element system and the data analysis system is normal may include: the network element system sends a message to the data analysis system, when the network element system receives a response message from the data analysis system, it is deemed that the link between the network element system and the data analysis system is normal; otherwise, it is deemed that the link between the network element system and the data analysis system is abnormal.

Preferably, before the data analysis system obtains the static user data reported by the network management system, the method may further include: the network management system determines the shared static data by configuring a static data sharing policy.

Preferably, a mode of reporting the user behaviour data by the network element system may at least include one of followings: periodical report, update report and overflow report.

Preferably, a mode of transmitting the user behaviour data between the network element system and the data analysis system may at least include one of followings: message transmission mode or file transmission mode.

Preferably, data may be transmitted by virtual routing forwarding between the network element system and the data analysis system.

An apparatus for acquiring mobile communication data is provided, which includes: a network management system, a network element system and a data analysis system; wherein the network management system and the network element system are connected with the data analysis system respectively, and the network management system is connected with the network element system; the network management system includes a static data acquisition module configured to acquire relationship information between a user Identity (ID) and a name, and/or shared static data, and report them to the data analysis system; the network element system includes a data acquisition module configured to acquire user behaviour data; and the data analysis system is configured to obtain the user behaviour data acquired and reported by the network element system, and perform user behaviour and feature analysis on the data reported by the network management system and the network element system.

Preferably, the network element system may further include a link status detection module configured to determine whether a link between the network element system and the data analysis system is normal, notify the network element system to report the user behaviour data to the data analysis system when the link between the network element system and the data analysis system is normal; and notify the network element system to report the user behaviour data to the network management system when the link between the network element system and the data analysis system is abnormal; and the network management system may be configured to generate, after receiving the user behaviour data reported by the network element system, a data acquisition file which is saved in the form of a file for the data analysis system to extract.

Preferably, the network element system may further include a data management module, which is connected with the data acquisition module and configured to control acquisition and report mode of the user behaviour data.

Preferably, the network element system may report the user behaviour data to the network management system or the data analysis system by at least one of following modes: periodical report, update report and overflow report.

Preferably, the network management system may further include a policy control module, wherein the policy control module is configured to send an instruction to the network element system which reports the user behaviour data according to the instruction.

Preferably, the network element system may report the user behaviour data to the data analysis system by at least one of following transmission modes: message transmission mode or file transmission mode.

Compared with the related technology, the method and apparatus for acquiring mobile communication data provided by the disclosure are advantaged in that a data acquisition mode is simple, and data transmission is safe and reliable.

### BRIEF DESCRIPTION OF THE DRAWINGS

Fig. 1 shows a structural diagram of an existing system for acquiring mobile communication data;
Fig. 2 shows a flowchart of a method for acquiring mobile communication data according to an embodiment of the disclosure;
Fig. 3 shows a structural diagram of an apparatus for acquiring mobile communication data according to an embodiment of the disclosure; and
Fig. 4 shows a structural diagram of the apparatus for acquiring mobile communication data shown as Fig. 3 in the case where a link between a network element system and a data analysis system in the apparatus is abnormal.

### DETAILED DESCRIPTION

The disclosure will be further described in detail with reference to embodiments and in combination with the accompanying drawings hereinafter.

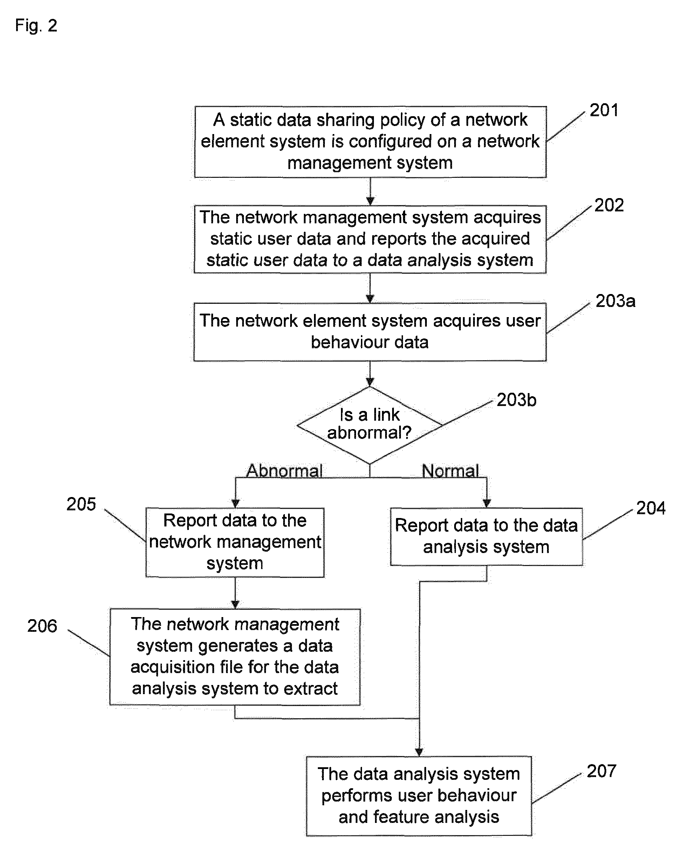

Referring to Fig. 2, Fig. 2 shows a flowchart of a method for acquiring mobile communication data according to an embodiment of the disclosure, which includes the following steps.

Step 201: a static data sharing policy of a network element system is configured on a network management system to determine shared static data.

Step 202: the network management system acquires the static user data and reports the acquired static user data to a data analysis system, wherein the static user data are relationship information between a user Identity (ID) and a name, and/or shared static data.

Steps 203a-203b: the network element system acquires user behaviour data, and the network element system determines whether a link between the network element system and the data analysis system is normal, when the link between the network element system and the data analysis system is normal, Step 204 is executed; and when the link between the network element system and the data analysis system is abnormal, Step 205 is executed.

Wherein, the step that the network element system determines whether the link between the network element system and the data analysis system is normal includes: the network element system sends a message to the data analysis system, if the network element system receives a response message from the data analysis system, then it is deemed that the link between the network element system and the data analysis system is normal; if the network element system does not receive a response message from the data analysis system or receives a response message indicating error, then it is deemed that the link between the network element system and the data analysis system is abnormal.

Specifically, the network element system periodically sends an argot message to the data analysis system, the data analysis system returns a corresponding argot message after receiving a normal message, and when the network element system receives a correct argot message response, it is deemed that the link between the network element system and the data analysis system is normal. If the data analysis system does not return a response message or returns an incorrect response message, then it is deemed that the link between the network element system and the data analysis system is abnormal, and a link alarm is generated to notify system maintenance personnel. If the link recovers from a failure, then an alarm recovery is performed. Preferably, a General Packet Radio Service (GPRS) Tunnelling Protocol for the User plane (GTP-U) format is used for the message response.

Step 204: the network element system reports the user behaviour data to the data analysis system, and Step 207 is executed.

Specifically, the data transmission mode between the network element system and the data analysis system includes message transmission mode and file transmission mode. Data are transmitted by virtual routing forwarding between the network element system and the data analysis system.

Step 205: the network element system reports the user behaviour data to the network management system, and Step 206 is executed.

Step 206: after receiving the user behaviour data reported by the network element system, the network management system generates a data acquisition file which is saved in the form of a file for the data analysis system to extract.

Step 207: the data analysis system performs user behaviour and feature analysis on the data reported by the network management system and the network element system.

The data analysis system performs the user behaviour and feature analysis on the data reported by the network element system and the network management system, wherein some static user data may derive from a third party system, such a mobile phone model library, and an operator performs comprehensive analysis and spadework based on this data to thus improve competitiveness of the operator.

In the embodiment, if an exception occurs to the link between the network element system and the data analysis system, then a protective measure is started. The user behaviour data can be reported to the network management system according to the set protective measure, and when the link gets back to normal, the user behaviour data are switched to be reported to the data analysis system by the network element system. The user behaviour data reported to the network management system are processed according to the policy between the network management system and the data analysis system, for example, after the data analysis system periodically obtains these user behaviour data from the network management system according to a File Transfer Protocol (FTP), and the user behaviour data are stored in a database, so as to ensure no loss of the user behaviour data acquired by the network element system and reliability of data.

In the embodiment, the network element system in an enabled status collects and records specific detailed behaviours of each user in the current system, such as cell change, location area change of the user or the like, and specific circumstances of each behaviour of the user, such as which protocol is adopted, which website is visited, residing time or the like. Meanwhile, other abnormal conditions, such as a condition that a user fails to access to a network, failure time, failure reason or the like, of each behaviour are recorded to complete acquisition operation of original user behaviour data. A data acquisition module of the network element system opens up certain memory space in the memory, divides data statistical record area of each specific service for each activated user, needs to report based on a time interval specified by a data acquisition management mechanism, and scans all online users of the current system within the time interval. Moreover, when attribute information of a user is changed, statistical information prior to the change also needs to be reported, wherein a mode of reporting the user behaviour data by the network element system includes the following data report policies: periodical report, update report, overflow report or the like. The data report policies can be managed by the data acquisition management mechanism, and operators can adopt specific policies as required.

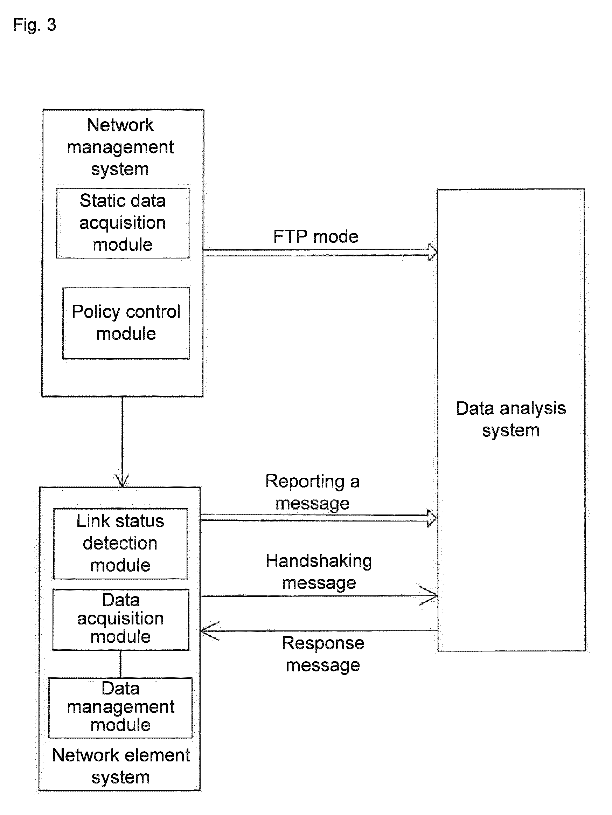

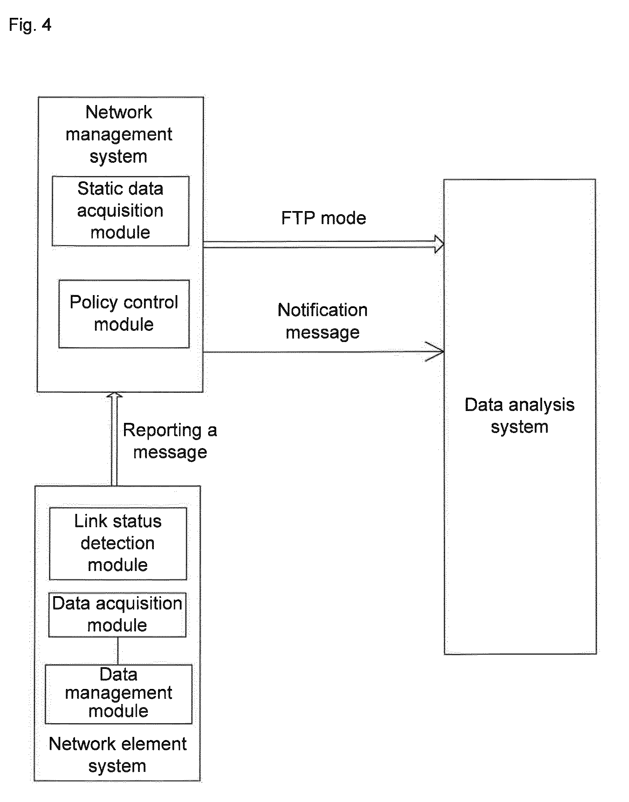

Referring to Fig. 3 and Fig. 4, Fig. 3 shows a structural diagram of an apparatus for acquiring mobile communication data according to an embodiment of the disclosure, and Fig. 4 shows a structural diagram of the apparatus for acquiring mobile communication data shown as Fig. 3 in the case where a link between a network element system and a data analysis system in the apparatus is abnormal.

The acquisition apparatus includes a network management system, a network element system and a data analysis system; wherein the network management system and the network element system are respectively connected with the data analysis system, and the network management system is connected with the network element system; the network management system includes a static data acquisition module, wherein the static data acquisition module is configured to acquire static data information including relationship information between a user Identity (ID) and a name, and/or shared static data, and report the static data information to the data analysis system; the network element system includes a data acquisition module configured to acquire user behaviour data; and the data analysis system is configured to obtain the user behaviour data acquired and reported by the network element system, and perform user behaviour and feature analysis on the data reported by the network management system and the network element system.

Further, the network element system further includes a link status detection module (or an interface module), wherein the link status detection module is configured to periodically detect and monitor whether a link between the network element system and the data analysis system is normal, and notify the network element system to report the user behaviour data to the data analysis system when the link between the network element system and the data analysis system is normal, wherein the network element system reports the user behaviour data to the data analysis system by message transmission mode or file transmission mode.

Fig. 4 shows a connection relationship among the network element system, the network management system and the data analysis system when an exception occurs to the link between the network element system and the data analysis system; in the case where the link status detection module detects that an exception occurs to the link between the network element system and the data analysis system, the network management system is connected with the data analysis system and the network element system, the link status detection module notifies the network element system to report the user behaviour data to the network management system, and after receiving the user behaviour data reported by the network element system, the network management system generates a data acquisition file which is saved in the form of a file for the data analysis system to extract, so as to ensure no loss of the user behaviour data acquired by the network element system and reliability of the user behaviour data.

Further, the network element system further includes a data management module, wherein the data management module is connected with the data acquisition module and configured to control acquisition and report mode of the user behaviour data. The mode of reporting the user behaviour data by the network element system includes periodical report, update report and overflow report.

The network management system further includes a policy control module wherein the policy control module is configured to send an instruction to the network element system which reports the user behaviour data according to the instruction.

In the embodiment, the data report policy, such as a period for reporting data of the network element system and a control policy of data report point, of the network element system is configured on the policy control module of the network management system. Once the network element system accords with the policy control condition, a corresponding action is triggered, so that data are reported as expected, thereby ensuring reliability and safety of the system. For example, during a time period when the network element system is busy, the reliability and safety of the network element system itself is ensured preferentially, so that normal call, Internet-surfing or the like of a user is ensured. Further, the network management system is also configured with a static data sharing policy indicating that which static data of the network management system can be shared with the data analysis system. The static shared data mainly provides a friendly interface for the data analysis system, to avoid secondary entering of data (that is, data are configured on the network management system once, and are also configured on the data analysis system once again), reduce repetitive work, so that data can be shared among systems. The data acquisition module of the network element system begins to acquire user behaviour data according to the report policy set by the network management system, when the acquisition of the user behaviour data accords with the policy set by the network management system, a corresponding policy is performed, and the user behaviour data are reported to the data analysis system by data transmission mode, such as message transmission mode or file transmission mode.

The above are further detailed description of the present disclosure with reference to the specific embodiments, which are not used to limit the specific implementation of the disclosure. Various simple deductions or replacements made by those skilled in the art within the concept of the present disclosure shall fall within the protection scope of the present disclosure.

## Claims

1. A method for acquiring mobile communication data, comprising:
obtaining, by a data analysis system, static user data reported by a network management system, wherein the static user data are relationship information between a user Identity (ID) and a name, and/or shared static data;
obtaining, by the data analysis system, user behaviour data acquired and reported by a network element system; and
performing, by the data analysis system, user behaviour and feature analysis on the data reported by the network management system and the network element system.

2. The method according to claim 1, further comprising: before the obtaining, by the data analysis system, the user behaviour data acquired and reported by the network element system, determining, by the network element system, whether a link between the network element system and the data analysis system is normal, when the link between the network element system and the data analysis system is normal, reporting, by the network element system, the user behaviour data to the data analysis system; and when the link between the network element system and the data analysis system is abnormal, reporting, by the network element system, the user behaviour data to the network management system, and after receiving the user behaviour data reported by the network element system, generating, by the network management system, a data acquisition file which is saved in the form of a file for the data analysis system to extract.

3. The method according to claim 2, wherein the determining, by the network element system, whether the link between the network element system and the data analysis system is normal comprises: sending, by the network element system, a message to the data analysis system, when the network element system receives a response message from the data analysis system, it is deemed that the link between the network element system and the data analysis system is normal; otherwise, it is deemed that the link between the network element system and the data analysis system is abnormal.

4. The method according to claim 1, further comprising: before the obtaining, by the data analysis system, the static user data reported by the network management system, determining, by the network management system, the shared static data by configuring a static data sharing policy.

5. The method according to any of claims 1-4, wherein a mode of reporting the user behaviour data by the network element system at least comprises one of followings: periodical report, update report and overflow report.

6. The method according to any of claims 1-4, wherein a mode of transmitting the user behaviour data between the network element system and the data analysis system at least comprises one of followings: message transmission mode or file transmission mode.

7. The method according to any of claims 1-4, wherein data are transmitted by virtual routing forwarding between the network element system and the data analysis system.

8. An apparatus for acquiring mobile communication data, comprising: a network management system, a network element system and a data analysis system; wherein the network management system and the network element system are connected with the data analysis system respectively, and the network management system is connected with the network element system;
the network management system comprises a static data acquisition module configured to acquire relationship information between a user Identity (ID) and a name, and/or shared static data, and report them to the data analysis system;
the network element system comprises a data acquisition module configured to acquire user behaviour data; and
the data analysis system is configured to obtain the user behaviour data acquired and reported by the network element system, and perform user behaviour and feature analysis on the data reported by the network management system and the network element system.

9. The apparatus according to claim 8, wherein the network element system further comprises a link status detection module configured to determine whether a link between the network element system and the data analysis system is normal, notify the network element system to report the user behaviour data to the data analysis system when the link between the network element system and the data analysis system is normal; and notify the network element system to report the user behaviour data to the network management system when the link between the network element system and the data analysis system is abnormal; and
the network management system is configured to generate, after receiving the user behaviour data reported by the network element system, a data acquisition file which is saved in the form of a file for the data analysis system to extract.

10. The apparatus according to claim 8, wherein the network element system further comprises a data management module, which is connected with the data acquisition module and configured to control acquisition and report mode of the user behaviour data.

11. The apparatus according to claim 10, wherein the network element system reports the user behaviour data to the network management system or the data analysis system by at least one of following modes: periodical report, update report and overflow report.

12. The apparatus according to claim 8, wherein the network management system further comprises a policy control module, wherein the policy control module is configured to send an instruction to the network element system which reports the user behaviour data according to the instruction.

13. The apparatus according to any of claims 8-12, wherein the network element system reports the user behaviour data to the data analysis system by at least one of following transmission modes: message transmission mode or file transmission mode.
